# EUROPÄISCHE PATENTSCHRIFT

(11) **EP 1 323 279 B1**
(45) Veröffentlichungstag und Bekanntmachung des Hinweises auf die Patenterteilung: **03.06.2009**
(21) Anmeldenummer: 01982174.3
(22) Anmeldetag: 02.10.2001
(51) Int. Cl.: H04L 29/06, H04L 12/58

(54) **VERFAHREN ZUR KOPPLUNG VON ONLINE- UND INTERNETDIENSTEN**
METHOD FOR COUPLING ONLINE AND INTERNET SERVICES
PROCEDE DE COUPLAGE DE SERVICES EN LIGNE ET DE SERVICES INTERNET

(30) Priorität: 05.10.2000 DE 10049618
(43) Veröffentlichungstag der Anmeldung: 02.07.2003
(73) Patentinhaber: T-Mobile Deutschland GmbH, 53227 Bonn (DE)
(72) Erfinder: KELLER, Walter, 40880 Ratingen (DE)
(74) Vertreter: Riebling, Peter
(86) Internationale Anmeldenummer: PCT/DE2001/003783
(87) Internationale Veröffentlichungsnummer: WO 2002/030081

(56) Entgegenhaltungen:
- BADER G: "FREEMAIL: DER MOBILE BUERO-SERVICE FUER UNTERWEGS WEB STATT NOTEBOOK" CHIP ZEITSCHRIFT FUER MIKROCOMPUTER-TECHNIK, VOGEL VERLAG. WURZBURG, DE, Nr. 8, August 1999 (1999-08), Seiten 182-183, XP000931020 ISSN: 0170-6632
- WOO T Y C ET AL: "Providing Internet services to mobile phones: a case study with email" PERSONAL, INDOOR AND MOBILE RADIO COMMUNICATIONS, 1998. THE NINTH IEEE INTERNATIONAL SYMPOSIUM ON BOSTON, MA, USA 8-11 SEPT. 1998, NEW YORK, NY, USA,IEEE, US, 8. September 1998 (1998-09-08), Seiten 99-105, XP010314728 ISBN: 0-7803-4872-9

## Beschreibung

Die Erfindung betrifft ein Verfahren zur Kopplung von Online- und Internetdiensten.

Ein wesentliches Anwendungsgebiet der Internet-Technik ist heute der Electronic Mail-Betrieb (e-mail). Hierzu wird beispielsweise das Simple Mail Transfer Protocol (SMTP) verwendet. Es basiert auf dem TCP/IP-Protokoll und somit im öffentlichen Internet, wie auch in den meisten Local Area Networks (LAN) durchgehend anwendbar.

Dieser e-mail-Dienst wird beispielsweise auch den meisten Kunden von sogenannten Online-Diensten (z. B. T-Online, AOL etc.) bereitgestellt. Auch Internet Access Provider (IAP) sowie Internet Service Providern (ISP), die über eigene Dienstleistungsangebote verfügen, stellen solche Dienstleistungen zur Verfügung. Alle diese Dienstleister ermöglichen Kunden, die über Telekommunikationsnetze angeschlossen sind, den Internet-Zugang und stellen bedarfsweise IP-basierende Dienstleistungen zur Verfügung. Dieses Diensteangebot wird nachfolgend zusammenfassend mit ISP bezeichnet.

Teilweise bieten auch Telekommunikationsnetzbetreiber eigene IP-basierte Dienstleistungen sowie den Übergang zum Internet an. Dies erfolgt beispielsweise im GSM-Mobilfunknetz mittels WAP- Plattform (Wireless Application Protocol). Solche Dienste sind für interne Kunden zugänglich, nicht jedoch für Internet-Kunden.

Der Aufsatz von WOO, T.Y.C et al: "Providing Internet Services to Mobile Phones: A Case Study with e-mail", Personal, Indoor and Mobile Radio Communications, 1998, The Ninth IEEE International Symposium on Bosten, MA, USA, ISBN: 0-7803-4872-9, Seiten 99-105, befasst sich mit dem Zugang zu Internetdiensten über Mobilfunkttelefone. Im Mobilfunknetz wird hierzu ein sogeannter Wireless Data Server eingerichtet, der als Internet-Service-Provider für die Mobilfunkkunden dient. Durch den Wireless Data Server werden für den Mobilfunkkunden e-mail Dienste aber auch andere Internet-Dienste zur Nutzung bereitgestellt und können über das Mobiltelefon abgerufen werden.

Daneben existieren sogenannte Freemail-Anbieter im Internet (vgl. Freemail-Anbieter im Test, Zeitschrift Tomorrow, Ausgabe 7/2000). Diese Anbieter stellen ebenfalls e-mail-Dienste und andere Dienstleistungen zur Verfügung. Sie verfügen im Gegensatz zu Online-Diensten und IAPs (ISPs) jedoch nicht über Einwahlknoten zu Telekommunikationsnetzen, sondern stellen Host-Rechner mit Internet-Anschluss im Internet bereit. Demgemäss können sie von Kunden erst im zweiten Schritt kontaktiert werden, wenn diese bereits über beispielsweise einen ISP zum Internet durchgeschaltet wurden. Solche Freemail-Anwendungen im Internet finanzieren sich meist aus Werbeerträgen und sind für die Anwender frei, während der ISP in der Regel einen Vertrag mit seinen Kunden abschließt und demgemäss Gebühren erhebt.

Der Kunde eines e-mail-Dienstes verfügt stets über einen sogenannten Account. Dies ist ein geschützter Zugang zu den eigenen Mails, die auf dem Server abgelegt sind. Der Vorteil der ISPs gegenüber dem Freemail-Anbieter besteht meist in der komfortablen und schnellen Zugangsart, in entsprechend geschützten Zugängen und in weniger Werbung.

Freemail-Zugänge sind meist nur durch User Identifikation (Name) und durch einfaches Passwort geschützt. Dabei ist die Missbrauch-Gefahr relativ groß. Ist einmal eine Verbindung zustande gekommen, wird die Datenübertragung meist durch zusätzliche Sicherheitsprotokolle, beispielsweise Secure Sockets Layer (SSL) geschützt. Der große Vorteil der Freemails besteht darin, das diese Dienste von jedem Internet-Anschluss weltweit zugänglich sind, während ISP-Dienste in der Regel nur vom häuslichen PC zugänglich sind, da die Zugangsparameter (Telefonanschluß) in der Zugangsprozedur als Sicherheitskriterium verwendet wird.

Ein mobiler Kunde besitzt hier diverse Einschränkungen. Es besteht zwar die Möglichkeit, diese Parameter auch in anderen PCs zu verwenden. Dies scheitert jedoch meist daran, dass fremde PCs oft nicht demgemäss konfigurierbar sind. So besitzen beispielsweise PC-Arbeitsplätze in Firmennetzen in aller Regel Serverbasierende Betriebssysteme, wie Microsoft Windows NT oder UNIX und können vom Benutzer nicht individuell konfiguriert werden.

Der mobile ISP-Kunde besitzt somit erhebliche Nachteile, wenn er seinen ISP-e-mail Account nutzt. Die Nachteile werden umso größer, wenn der e-mail-Provider nicht nur Mail-Dienste, sondern ein erweitertes Angebot, beispielsweise Unified Messaging etc. bietet (vgl. Unified Messaging Anbieter im Vergleich, Zeitschrift Tomorrow, Ausgabe 7/2000). In diesem Fall fallen gleichzeitig umfangreiche Dienstleistungen für den ISP-Kunden aus. Daher weichen immer mehr ISP-Kunden auf Freemail-Anbieter aus, um zumindest ihre e-mails überall empfangen zu können.

In dem Artikel von Bader, G.: "Freemail: Der Mobile Büro-Service für unterwegs, Web statt Notebook", in Chip Zeitschrift für Microcomputer-Technik, Vogel-Verlag, Würzburg, DE, Nr. 8, August 1999, ISSN: 0170-6632, Seiten 182-183 sind die von verschiedenen Freemail-Anbietern angebotenen Dienste und deren Vorteile beschrieben. Eine Möglichkeit des Zugriffs und der Nutzung von Dienstleistungen eines herkömmlichen Internet-Service-Providers z.B. über dem Freemaillnternetzugang ist nicht beschrieben.

Der vorliegenden Erfindung liegt die Aufgabe zugrunde, ein Verfahren vorzuschlagen, auf dessen Basis ein einfacher ortsunabhängiger Zugang mobiler Kunden zu e-mail -Diensten und anderen Diensten ihrer Online- oder ISP-Vertragspartner realisiert werden kann.

Gelöst wird diese Aufgabe durch die Merkmale des Patentanspruchs 1.

Dabei wird das bestehende Problem, dass insbesondere personalisierte Dienste (e-mail etc.) bei Internet Service Providern und Online Providern nur über Telekommunikationsnetz und RAS-/RADIUS-Zugang erreichbar sind, nicht jedoch über das öffentliche Internet, in der Art gelöst, dass der ISP mit einer Offenen Internet Applications-Plattform (OIA) ausgestattet wird (beispielsweise Freemail-Plattform) und die Plattformen in der Art gekoppelt werden, dass der ISP-Kunde auch beim Zugriff über Internet ein im Vergleich zum üblichen Internet-Kunden erweitertes Diensteangebot nutzen kann.

Erfindungsgemäß können nun Dienste, wie beispielsweise e-mail-Dienste, Messaging etc., die in der Regel nur für Vertragskunden/Netzkunden mit Zugang über Telekommunikationsnetz und RAS-/Radius- geschützter Authentisierungsprozedur zur Verfügung stehen, über die allgemein zugängliche Internet-Schnittstelle erreicht werden. Hierdurch ist der Vertragskunde stets über seine ISP-e-mail-Adresse erreichbar und kann den Mail-Account bedarfsweise über das öffentliche Internet von einem beliebigen Terminal aus nutzen.

Vorteilhafte Ausgestaltungen und Abwandlungen der Erfindung sind in den abhängigen Patentansprüchen angegeben.

Die Erfindung wird unter Verwendung von Zeichnungsfiguren, die hier lediglich eine mögliche Ausführungsart in schematischer Darstellung beschreiben, erläutert, wobei sich anhand der Zeichnungsfiguren weitere Merkmale, Vorteile und Anwendungsgebiete der Erfindung ergeben. Es zeigt:
- Figur 1:: Erfindungsgemäß kombiniertes Diensteangebot mit gekoppelter ISP- und OIA-Plattform
- Figur 2:: ISP-Zugang über Telefon-Festnetz nach dem Stand der Technik
- Figur 3:: ISP-Zugang über Mobilfunknetz nach dem Stand der Technik
- Figur 4:: Freemail-Plattform nach dem Stand der Technik

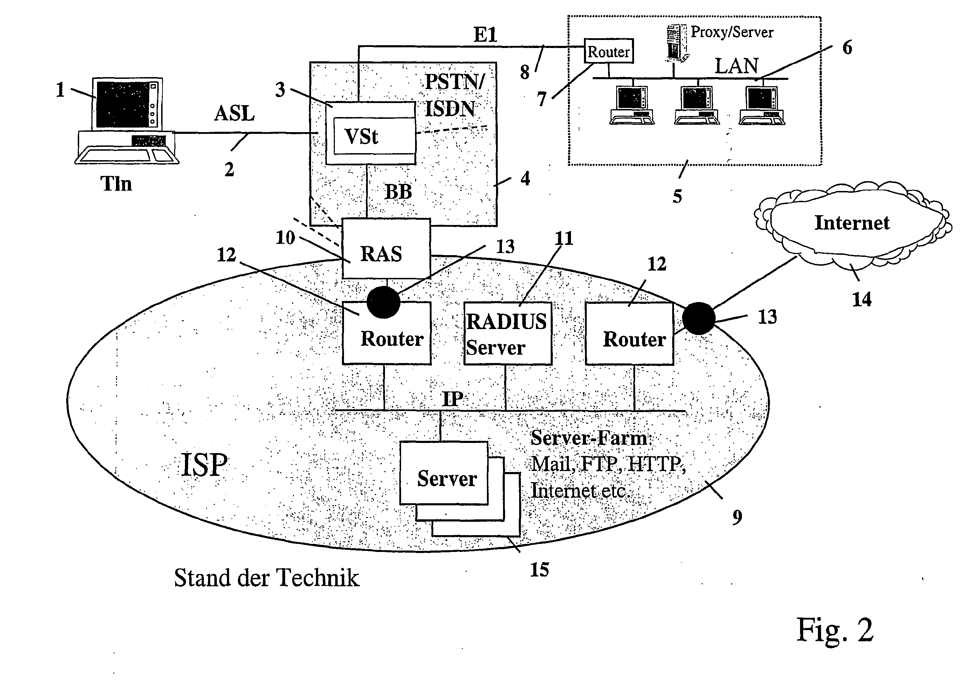

Figur 2 zeigt die übliche Verfahrensweise bei der Nutzung von e-mail-Diensten durch den Kunden eines Online- oder Internet Service-Providers 9. Das Kundenterminal 1 (Teilnehmer Tln) ist über eine Anschlussleitung 2 mit der Vermittlungsstelle 3 (VSt) eines Telekommunikationsnetzes 4 verbunden. Eine vergleichbare Situation besteht für Firmenkunden 5. Das Lokale Netzwerk 6 (LAN) ist über einen Router 7 und in der Regel eine höherwertige Schnittstelle 8 (z. B. CCITT/ITU-E1-Link mit 2,048 Mbit/s) an eine Vermittlungsstelle 3 angeschlossen.

Der Übergang vom Kommunikationsnetz 4 zum Internet Service Provider (ISP) 9 erfolgt mittels Einwahl über Remote Access Server (RAS) 10. Der RAS 10 nimmt zunächst mit Unterstützung eines eingebauten RADIUS-Client die Verbindung mit dem Radius-Server 11 des ISP auf. Der Radius-Server 11 ist für Authentication, Authorisation & Accounting zuständig (AAA). Damit werden die Zugangsrechte verifiziert und der Dienst als solches kann bepreist werden. In der Regel berechnet der ISP 9 eine monatliche Grundgebühr, eine zeitliche Zugangsgebühr sowie diverse Dienstekosten und rechnet oft über die Telefonrechnung des Telekommunikationsunternehmens mit dem Kunden ab.

Die Eingangs- und Ausgangspunkte des ISP 9 sind in der Regel mit Routern 12 zwecks Routing der IP-Protokolle sowie zusätzlich mit sogenannten Firewalls 13 ausgerüstet (hier als Punkt dargestellt). Firewalls 13 erlauben das Überwachen des Datenverkehrs und das Sperren nicht gewünschter Zugriffe. Sie bieten somit mehr Sicherheit für das Netz des ISP 9 sowie für dessen Dienste und die Dateninhalte der Kunden.

Ein Zugriff aus dem Internet auf die Serverfarm 15 des ISP 9 (z. B. e-mail) ist daher aus Sicherheitsgründen nicht möglich.

Der Standort der Server 15 in einem derart geschützten Bereich wird auch als demilitarisierte Zone (DZ) bezeichnet.

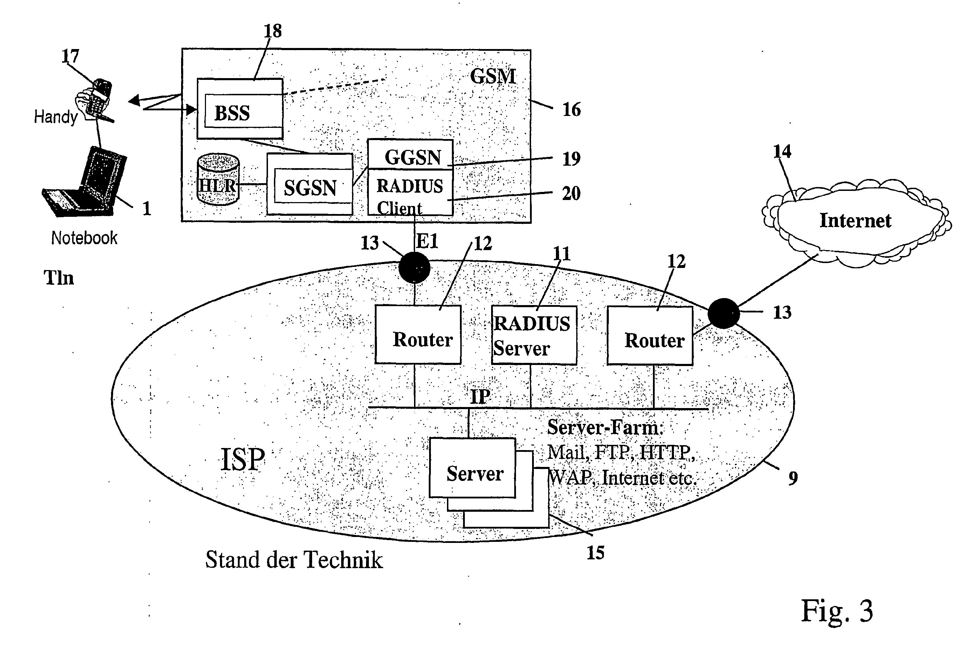

Figur 3 zeigt beispielhaft den Zugang zu e-mail Diensten etc. aus einem Mobilfunknetz, beispielsweise dem GSM-Netz 16 (vgl. The GSM System for Mobile Communications, Michel Mouly, Marie-Bernadette Pautet, Cell&Sys-Verlag, Frankreich, 1992, ISBN 2-9507190-0-7it.3) mittels GPRS-Service (vgl. GSM 03.60, Digital cellular telecommunications system, General Packet Radio Service (GPRS) Service Description, ETSI). Das Kundenterminal 1, hier beispielsweise ein Notebook, ist mit einem Mobilfunkendgerät 17 verbunden, mittels dem eine Verbindung zu einem Basisstationssystem 18 des Mobilfunknetzes 16 hergestellt wird. Der Radius-Client 20 befindet sich hier bereits in einem Netzknoten 19 (GPRS Gateway Support Node, GGSN). Über das Mobilfunknetz 16 wird eine Verbindung zum Internet.

Service Provider 9 hergestellt. Der Mobilfunkkunde kann international mobil sein. Im Roamingfall besteht jedoch netzintem eine Verbindung vom Aufenthaltsnetz (Visitor Network) zum Vertragsnetz (Home Network). Die Roaming-Situation stellt daher eine Sonderlösung dar. Sie ist beschränkt auf Vertragspartner des Mobilfunkbetreibers, die über eine vergleichbare technische Ausstattung, freigeschaltete GPRS-Dienste sowie einen Roaming-Vertrag mit dem Heimatnetz verfügen.

Abgesehen von diesen Sonderfällen, wird auch bei Mobilität in anderen Netzen der Zugang zum ISP 9 durch das Vertragsnetz in gleicher Weise zum ISP 9 geleitet, wie bei stationärem Aufenthalt. Das Zugangsprinzip ist damit in allen Fällen für Festnetz- und Mobilfunkkunden (Privat und Geschäftskunden) vergleichbar mit Figur 2. Es wird daher im weiteren Text nicht in unterschiedliche Zugangsnetze unterschieden.

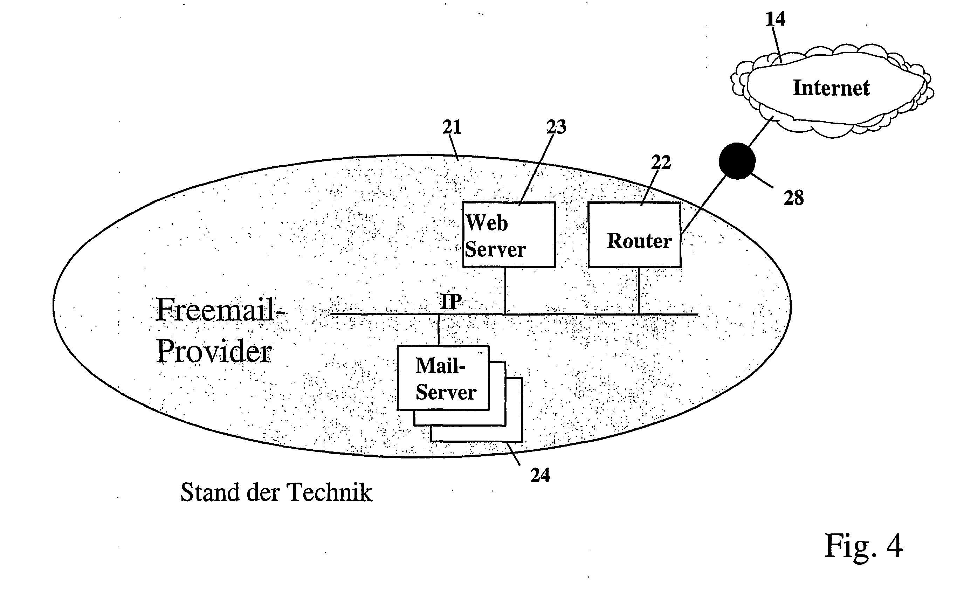

Figur 4 zeigt beispielhaft die Host-Anordnung eines Freemail-Providers 21. Der Service-Zugang zum Internet 14 wird über lntemet-Anschluß 22 (Router) bereitgestellt. Optional ist eine zusätzliche Firewall 28, vorwiegend zum Schutz der eigenen Einrichtungen, vorhanden.

Ein Web-Server 23 terminiert die Kommunikation mit dem Kunden, identifiziert User-ID und Passwort und gestattet den Zugang zum Mail-Server 24. Ein Sicherheitsprotokoll (beispielsweise SSL) kann beispielsweise im Router 22, im Web-Server 23, oder im e-mail-Server 24 betrieben werden.

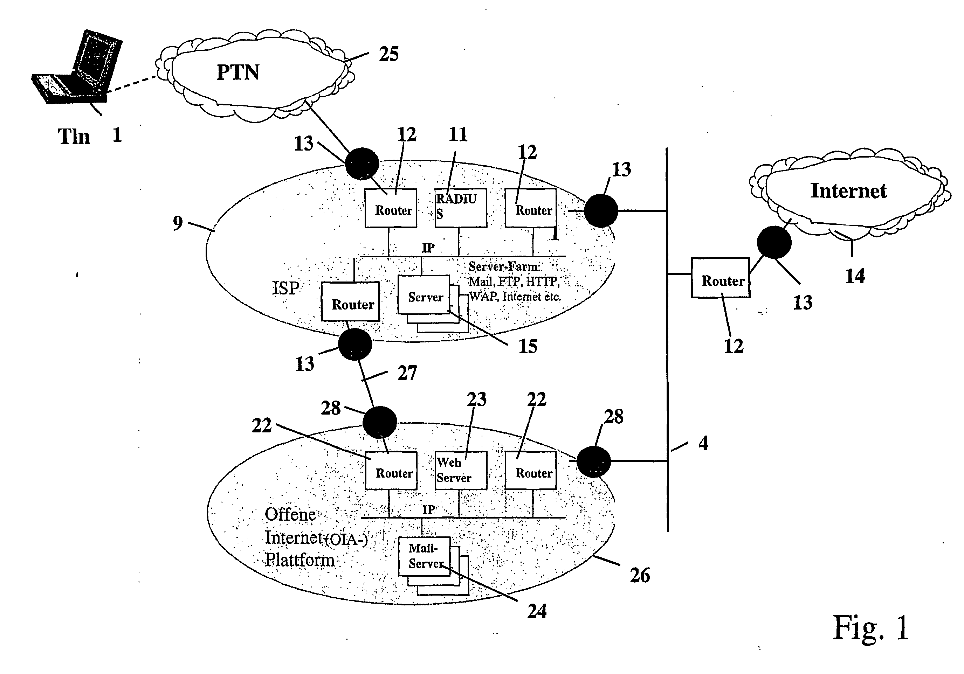

Figur 1 zeigt beispielhaft eine patentgemäße Realisierung zur Kopplung von Internet- und Online-Diensten. Dabei werden beide Diensteangebote derart kombiniert, dass sowohl der Remote Access Server, RAS, - seitige Zugang über Telekommunikationsnetz vom Kunden zum ISP 9 realisiert wird, als auch ein internetseitiges Angebot (Open Internet Applications, OIA) des ISP bereitgestellt wird.

Das Kundenterminal 1 ist über ein Telekommunikationsnetz 25 mit dem Internet Service Provider 9 verbunden und kann sowohl dessen Dienste nutzen als auch Dienste im Internet 14, die z. B. von der Offenen Internet Plattform 26 (OIA) bereitgestellt werden.

Ein beliebiger Kunde aus dem Internet 14 bzw. ein beliebiger ISP- Kunde, der sich in den e-mail-Server 24 der OIA-Plattform 26 einwählt, kann nun einen e-mail-Account (Freemail-Account) in bereits beschriebener Verfahrensweise einrichten und betreiben.

Zusätzlich besteht bei dieser Anordnung die Möglichkeit für Vertragskunden des ISP 9, ihre e-mails der ISP-Plattform auf den e-mail-Server 24 der OIA-Plattform 26 umzuleiten und bedarfsweise umgekehrt. Dieser Dienst kann RAS-seitig sowie optional Internet-seitig administriert werden. Der Kunde nutzt somit auch für den Freemail-Account seine vorhandene e-mail-Adresse des ISP-Netzes. Hierdurch ist der Vertragskunde stets über seine ISP-e-mail-Adresse erreichbar und kann den Mail-Account jedoch auch bedarfsweise über das öffentliche Internet von einem beliebigen Terminal aus nutzen.

Der hohe Sicherheitsstandard des ISP für Vertragskunden ist weiterhin gewahrt, das Geschäftsfeld kann jedoch auch auf Internet-Kunden ausgeweitet werden.

Die schematische Abbildung (Figur 1) zeigt vollständig getrennte physikalische Plattformen, unabhängige e-mail-Server 15 und 14 und eine Provider-interne Verbindung 27 zwischen den Plattformen 9 und 26. Hierdurch ist die größte Sicherheit gegeben.

Alternativ kann die physikalische Trennung auch teilweise oder vollständig durch eine logische Trennung ersetzt werden, indem in ISP 9 und OIA 26 zumindest teilweise die gleichen Hardwareeinrichtungen verwendet werden. In diesem Fall entstehen unterschiedliche logische Netze, die durch unterschiedliche IP-Adressierung sowie bedarfsweise unterschiedliche Hardware-Schnittstellen und getrennte Softwareprozeduren gesichert sind. Hierbei können beispielsweise zwei unabhängige e-mail-Server auf einer Host-Computer eingerichtet werden, oder es wird eine e-mail Datenbank mit kombinierten Zugangsprozeduren eingerichtet.

Die größte Sicherheit stellt allerdings die unabhängige Hardware-Plattform dar.

### Zeichnungslegende

- 1: Kundenterminal
- 2: Anschlussleitung
- 3: Vermittlungsstelle
- 4: Telekommunikationsnetz
- 5: Firmenkunde
- 6: LAN (Local Area Network)
- 7: Router
- 8: Schnittstelle
- 9: Internet Service Provider (ISP)
- 10: Remote Access Server (RAS)
- 11: Radius-Server
- 12: Router
- 13: Firewall
- 14: Internet
- 15: Server-Farm
- 16: GSM-Mobilfunknetz
- 17: Mobilfunkendgerät
- 18: Basisstationssystem
- 19: Netzknoten (GGSN)
- 20: Radius-Client
- 21: Freemail-Provider
- 22: Internet-Anschluss Router
- 23: Web-Server
- 24: Mail-Server
- 25: Telekommunikationsnetz
- 26: Offene Internet Plattform (OIA)
- 27: Schnittstelle
- 28: Firewall

## Patentansprüche

1. Verfahren zur Kopplung von Online- und Internetdiensten, bei dem persönliche Kundendaten von Internet Service-Providern, ISP, (9) mittels gesicherter Zugangsmöglichkeit Ober eine Internet-Schnittstelle des Internet Service Providers (9) zugänglich sind, **dadurch gekennzeichnet, dass** diese Dienste zum Zwecke der Nutzung und/oder Einrichtung und/oder Änderung über eine vom jeweiligen Telekommunikationsnetz und vom jeweils verwendeten Terminal (1) unabhängige weltweite Zugangs möglichkeit verfügen, wobei der Internet-Service-Provider (9) mit einer Offenen Internet Plattform OIA (26) als gesicherte Zugangsmögichkeit an das Internet angebunden wird, und der ISP (9) in der Art mit der OIA (26) gekoppelt wird, dass ein Kunde des Internet-Service-Providers (9) über das Internet (14) Zugang zur OIA (26) und über die OIA (26) Zugang zum ISP (9) und damit Zugang zu allgemeinen und personalisierten Dienstleistungen, sowie persönlichen Kundendaten von Online-Diensten und Telekommunikationsnetzen erlangt.

2. Verfahren nach Anspruch 1,
**dadurch gekennzeichnet, dass** das Diensteangebot zumindest für die Vertragskunden des Internet Service Providers (9) nutzbar ist.

3. Verfahren nach einem oder mehreren der vorhergehenden Ansprüche,
**dadurch gekennzeichnet, dass** die OIA (26) mit gesicherter Zugangsmöglichkeit über das öffentliche Internet (14), zumindest mit User-Identifikation, Passwortschutz und optionalem Sitcherheitsprotokoll, wie SSL, eingerichtet wird.

4. Verfahren nach einem oder mehreren der vorhergehenden Ansprüche,
**dadurch gekennzeichnet, dass** die OIA (26) als vom ISP (9) unabhängige physikalische Hard- und Softwareplattform realisiert wird.

5. Verfahren nach einem oder mehreren der vorhergehenden Ansprüche,
**dadurch gekennzeichnet, dass** die OIA (26) entweder teilweise oder komplett als Softwareplattform auf der gleichen Hardware des ISP (9) realisiert wird, wobei die Unabhängigkeit, durch unterschiedliche Portadressen, unterschiedliche Software-Prozesse, unterschiedliche Datenbanken, oder zumindest unterschiedliche Zugriffsprozeduren auf den gleichen Datenbestand realisiert wird.

6. Verfahren nach einem oder mehreren der vorhergehenden Ansprüche,
**dadurch gekennzeichnet, dass** die OIA (26) für beliebige Internetkunden, die nicht Vertragskunden des ISP(9) sind, zur Verfügung gestellt wird, wobei die Vertragskunden über besondere Vorteile insbesondere durch Kopplung der ISP-Plattform (9) und der OIA-Plattform (26) verfügen, indem sie über den OIA-Internet-Zugang auf ISP-Dienste zugreifen können, bzw. ISP-Dienste in der OIA-Plattform als Datenkopie und/oder als Datenweiterleitung verfügbar gemacht werden.

7. Verfahren nach einem oder mehreren der vorhergehenden Ansprüche,
**dadurch gekennzeichnet, dass** ein ISP-Mail-Account (15) eines Kunden des ISP vom ISP (9) in die OIA-Plattform (26) umgeleitet wird, damit der Kunde einen Orts-,Terminal- und Telekom-Zugangsnetz-unabhängigen Zugang erhält.

8. Verfahren nach einem oder mehreren der vorhergehenden Ansprüche,
**dadurch gekennzeichnet, dass** eine Administration des Internet-Zugangs zumindest bei einem Zugang über einen Remote Access Server, RAS, (10) durch den ISP-Vertragskunden erfolgt.

9. Verfahren nach einem oder mehreren der vorhergehenden Ansprüche,
**dadurch gekennzeichnet, dass** eine Administration des Internet-Zugangs über den Internet-Zugang erfolgt.

10. Verfahren nach einem oder mehreren der vorhergehenden Ansprüche,
**dadurch gekennzeichnet, dass** eine Umleitung bzw. eine Kopie von Diensten und/oder Daten aus den Servern (15) und Datenbanken des ISP (9) in eine Server/Datenbanken (24) der OIA-Plattform (26) über eine zumindest unidirektionale Schnittstelle (27) erfolgt, die gegen unbeabsichtigten und unberechtigten Zugriff vorzugsweise mittels Filtertechnik und/oder Firewall (28) gesichert ist, wobei diese Schnittstelle (27) vorzugsweise nicht für den Internetverkehr/Kundenzugriffe zugänglich ist.

11. Vorrichtung zur Durchführung des Verfahrens gemäß der vorhergehenden Ansprüche, **gekennzeichnet durch**
eine an den Internet Service Provider (9) angebundene gesicherte Internet-Schnlttstelle In Form einer Offenen Internet Plattform, OIA, (26), die an das Internet (14) angebunden ist und über das Internet unabhängig vom jeweiligen Telekommunikationsnetz und vom jeweils verwendeten Terminal einen weltweiten Zugang zu allgemeinen und personalisierten Dienstleistungen sowie persönlichen Kundendaten von Online-Diensten, Telekommunikationsnetzen und Internet Service-Providern erlaubt.

## Claims

1. Method for interconnecting on-line and internet services in which personal customer data of internet service providers, ISPs, (9) are accessible by means of a secured possibility of access via an internet interface of the internet service provider (9), **characterised in that** for the purpose of usage and/or setting up and/or alteration these services have a global possibility of access independent of the telecommunications network in question and of the terminal (1) used at the time, wherein the internet service provider (9) is connected to the internet by an open internet platform OIA (26) as secured possibility of access and the ISP (9) is linked to the OIA (26) in such a way that a customer of the internet service provider (9) gains access via the internet (14) to the OIA (26) and access via the OIA (26) to the ISP (9) and hence access to the general and personalised services as well as personal customer data of on-line services and telecommunications networks.

2. Method according to claim 1, **characterised in that** the range of services is available for use at least by the contract customers of the internet service provider (9).

3. Method according to one or more of the preceding claims, **characterised in that** the OIA (26) with secured possibility of access is set up via the public internet (14) at least with user identification, password protection and optional security protocol such as SSL.

4. Method according to one or more of the preceding claims, **characterised in that** the OIA (26) is implemented as a physical hardware and software platform independent of the ISP (9).

5. Method according to one or more of the preceding claims, **characterised in that** the OIA (26) is implemented either in part or completely as a software platform on the same hardware of the ISP (9), wherein the independence is achieved by different port addresses, different software processes, different databases or at least different access procedures to the same data set.

6. Method according to one or more of the preceding claims, **characterised in that** the OIA (26) is made available to any internet customers who are not contract customers of the ISP (9), wherein the contract customers have special advantages due in particular to interconnection of the ISP platform (9) and the OIA platform (26) **in that** they can access ISP services via OIA-internet access or ISP services are made available in the OIA platform as a data copy and/or by passing on data.

7. Method according to one or more of the preceding claims, **characterised in that** an ISP mail account (15) of a customer of the ISP is diverted by the ISP (9) into the OIA platform (26) so that the customer obtains access independent of location, terminal and telecommunications access network.

8. Method according to one or more of the preceding claims, **characterised in that** administration of internet access ensues at least on access via a remote access server, RAS, (10) by the ISP contract customer.

9. Method according to one or more of the preceding claims, **characterised in that** administration of internet access ensues via the internet access.

10. Method according to one or more of the preceding claims, **characterised in that** diversion or a copy of services and/or data from the servers (16) and databases of the ISP (9) into a server/databases (24) of the OIA platform (26) ensues via an at least unidirectional interface (27) which is secured against unintended and unauthorised access preferably by means of filter technology and/or firewall, wherein this interface (27) is preferably not accessible for internet traffic/customer accesses.

11. Device for carrying out the method according to the preceding claims, **characterised by** a secured internet interface linked to the internet service provider (9) in the form of an open internet platform, OIA, (26) which is connected to the internet (14) and via the internet independently of the telecommunications network in question and of the terminal used at the time allows global access to general and personalised services as well as personal customer data of on-line services, telecommunications networks and internet service providers.

## Revendications

1. Procédé de couplage de services en ligne et de services Internet, selon lequel des données de clients personnelles de fournisseurs de services Internet, ISP (9), sont accessibles à l'aide d'une possibilité d'accès sécurisée, par l'intermédiaire d'une interface Internet du fournisseur de services Internet (9),
**caractérisé en ce que** ces services, pour être utilisés et/ou installés et/ou modifiés, disposent d'une possibilité d'accès mondiale qui est indépendante du réseau de télécommunication et du terminal (1) utilisé, le fournisseur de services Internet (9) étant relié à l'Internet avec une plate-forme Internet ouverte OIA (26) comme possibilité d'accès sécurisée, et l'ISP (9) étant couplé à la plate-forme OIA (26) de telle sorte qu'un client du fournisseur de services Internet (9) ait accès par l'Internet (14) à la plate-forme OIA (26) et par celle-ci à l'ISP (9) et donc à des services généraux et à des services personnalisés, ainsi qu'à des données de client personnelles de services en ligne et de réseaux de télécommunication.

2. Procédé selon la revendication 1, **caractérisé en ce que** l'offre de services est utilisable au moins pour les clients contractuels du fournisseur de services Internet (9).

3. Procédé selon l'une au moins des revendications précédentes, **caractérisé en ce que** la plate-forme OIA (26) est installée par l'intermédiaire de l'Internet public (14) avec une possibilité d'accès sécurisée, au moins à l'aide d'une identification d'utilisateur, d'une protection par mot de passe et d'un protocole de sécurité optionnel, tel que SSL.

4. Procédé selon l'une au moins des revendications précédentes, **caractérisé en ce que** la plate-forme OIA (26) est réalisée sous la forme d'une plate-forme matérielle et logicielle physique indépendante de l'ISP (9).

5. Procédé selon l'une au moins des revendications précédentes, **caractérisé en ce que** la plate-forme OIA (26) est réalisée partiellement ou complètement sous la forme d'une plate-forme logicielle sur le même matériel de l'ISP (9), l'indépendance étant réalisée grâce à des adresses de port différentes, à des processus logiciels différents, à des banques de données différentes ou du moins à des procédures d'accès au même stock de données qui sont différentes.

6. Procédé selon l'une au moins des revendications précédentes, **caractérisé en ce que** la plate-forme OIA (26) est mise à la disposition de n'importe quels clients Internet qui ne sont pas des clients contractuels de l'ISP (9), les clients contractuels disposant d'avantages spéciaux en particulier grâce au couplage de la plate-forme (9) et de la plate-forme OIA (26), en pouvant accéder par l'accès Internet OIA à des services ISP ou dans la mesure où des services ISP peuvent être rendus disponibles dans la plate-forme OIA sous forme de copie de données et/ou de transfert de données.

7. Procédé selon l'une au moins des revendications précédentes, **caractérisé en ce qu'**un compte de messagerie ISP (15) d'un client de l'ISP est redirigé par l'ISP (9) vers la plate-forme OIA (26) pour que le client obtienne un accès indépendant de l'endroit, du terminal et du réseau d'accès de télécommunication.

8. Procédé selon l'une au moins des revendications précédentes, **caractérisé en ce qu'**une gestion de l'accès à Internet est effectuée par le client contractuel ISP au moins en cas d'accès par un serveur d'accès à distance, RAS, (10).

9. Procédé selon l'une au moins des revendications précédentes, **caractérisé en ce qu'**une gestion de l'accès à Internet est effectuée par l'intermédiaire de l'accès à Internet.

10. Procédé selon l'une au moins des revendications précédentes, **caractérisé en ce qu'**un réacheminement ou une copie de services et/ou de données des serveurs (15) et des banques de données de l'ISP (9) vers un serveur/des banques de données (24) de la plate-forme OIA (26) se fait par l'intermédiaire d'une interface (27) au moins unidirectionnelle qui est protégée de préférence à l'aide d'une technique de filtrage et/ou d'un pare-feu (28) contre un accès accidentel et non autorisé, cette interface (27), de préférence, n'étant pas accessible pour le trafic Internet/pour des accès de clients.

11. Dispositif pour la mise en oeuvre du procédé selon les revendications précédentes, **caractérisé par** une interface Internet sécurisée reliée au fournisseur de services Internet (9), sous la forme d'une plate-forme Internet ouverte, OIA, (26) qui est reliée à l'Internet (14) et qui permet par l'intermédiaire de l'Internet, indépendamment du réseau de télécommunication et du terminal utilisé, un accès mondial à des services généraux et à des services personnalisés ainsi qu'à des données de client personnelles sur des services en ligne, des réseaux de télécommunication et des fournisseurs de services Internet.
